# FASCICULE DE BREVET EUROPEEN

(11) **EP 1 200 931 B1**
(45) Date de publication et mention de la délivrance du brevet: **28.01.2004**
(21) Numéro de dépôt: 00943990.2
(22) Date de dépôt: 27.06.2000
(51) Int. Cl.: G06K 19/07, G06K 7/00, G07C 9/00

(54) **PROCEDE ET SYSTEME DE DETECTION D'INDIVIDUS OU D'OBJETS DANS UN ESPACE DELIMITE PRESENTANT UNE ENTREE**
VERFAHREN UND VORRICHTUNG ZUR DETEKTION VON PERSONEN ODER OBJEKTEN IN EINEM ABGEGRENZTEN RAUM MIT EINEM EINGANG
METHOD AND SYSTEM FOR DETECTING THE PRESENCE OF PEOPLE OR OBJECTS IN A DELIMITED SPACE WITH AN ENTRANCE

(30) Priorité: 02.07.1999 EP 99112824; 28.07.1999 EP 99114803
(43) Date de publication de la demande: 02.05.2002
(73) Titulaire: EM Microelectronic-Marin SA, 2074 Marin (CH)
(72) Inventeur: DEGRAUWE, Marc, CH-2025 Chez-le-Bart (CH)
(74) Mandataire: Surmely, Gérard
(86) Numéro de dépôt international: PCT/EP2000/006262
(87) Numéro de publication internationale: WO 2001/003057

(56) Documents cités:
- EP-A- 0 465 456
- EP-A- 0 534 559
- EP-A- 0 578 457
- WO-A-82/00377
- WO-A-92/08148
- US-A- 5 471 404

## Description

La présente invention concerne la détection d'individus ou d'objets dans un espace délimité présentant au moins une entrée. Plus particulièrement, la présente invention concerne la détection de la présence d'individus ou d'objets dans un espace délimité pendant une période temporelle ultérieure au passage par l'entrée de ces individus ou objets. Par entrée, il faut comprendre de manière large toute porte ou chemin de passage donnant accès à l'espace délimité en question. A titre d'exemple, il est prévu de détecter la présence d'individus lors d'un trajet dans un transport public ou lors d'un événement sportif ou culturel ayant lieu dans un endroit délimité.

Dans le cas de la présente invention, il est prévu de détecter la présence d'individus ou d'objets au moyen de cartes ou d'unités électroniques portables ayant des moyens pour recevoir des premières données sous forme de signaux électromagnétiques et des moyens pour fournir des deuxièmes données également sous forme de signaux électromagnétiques. Il est prévu de munir les individus ou objets de telles unités électroniques portables.

Pour s'assurer de la présence d'un individu ou d'un objet dans un espace délimité à un moment donné, il n'est souvent pas suffisant de détecter son passage à proximité d'une entrée à cet espace. On remarquera que certains individus ou objets situés momentanément à proximité d'une entrée peuvent entrer en communication avec un émetteur ou émetteur-récepteur susmentionné situé à cette entrée qui, en l'absence d'autres moyens appropriés, considérera que l'individu ou l'objet en question est entré dans ledit espace. Cette conclusion peut s'avérer erronée étant donné qu'un individu ou un objet peut être momentanément à proximité d'une entrée d'un espace limité sans y pénétrer. De plus, il est également possible qu'une personne pénètre pour un instant et ressorte avant un événement déterminant, par exemple le début d'un film ou la fermeture des portes d'un moyen de transport public. Selon l'agencement de l'émetteur ou émetteur-récepteur prévu à l'entrée, il n'est pas possible de garantir que la sortie de l'individu ou de l'objet avant ledit événement déterminant soit correctement enregistré et ainsi une incertitude demeure quant à sa présence dans ledit espace limité après cet événement déterminant.

De manière générale, l'invention se propose de palier les inconvénients susmentionnés en prévoyant de disposer à l'intérieur de l'espace délimité un ou plusieurs récepteurs ou lecteurs susceptibles d'entrer en communication avec les unités électroniques portables présentes dans cet espace après un événement déterminant, par exemple entre deux arrêts ou gares dans le cas d'un transport public.

Toutefois, un problème important demeure étant donné que la communication à moyenne distance, en particulier de l'ordre de grandeur des mètres ou de la dizaine de mètres, n'est pratiquement réalisable qu'à une relativement haute fréquence, par exemple de l'ordre des centaines de MHz. Or, pour maintenir le circuit électronique de réception d'une unité électronique portable en mode d'écoute, c'est-à-dire dans un état propre à recevoir un signal électromagnétique codé, la consommation en énergie est relativement importante et nécessite une source d'énergie de relativement grande capacité, laquelle est difficilement intégrable dans une unité électronique destinée à être portée notamment par un individu. Etant donné que pour de nombreuses applications, il est nécessaire que le récepteur de l'unité électronique portable soit apte à recevoir instantanément et en permanence un signal codé, le fait de prévoir des récepteurs ou émetteurs-récepteurs dans ledit espace délimité n'est pas suffisant en tant que tel pour un système fonctionnel lorsque l'espace délimité en question a au moins une dimension de l'ordre du mètre ou de la dizaine de mètres.

Il est connu du document WO 92/08148 un système d'identification de personnes équipées de transpondeurs agencés pour fonctionner selon deux modes différents. Chaque transpondeur comprend un récepteur à basse fréquence et un émetteur à haute fréquence. Dans un mode de veille, le récepteur basse fréquence est actif pour recevoir un signal d'interrogation d'un lecteur agencé à l'entrée d'une zone sécurisée. Lorsque le transpondeur reçoit un tel signal d'interrogation, il donne son identification au lecteur par son émetteur haute fréquence. Ensuite, lorsqu'il quitte la région de l'entrée et pénètre la zone sécurisée, le transpondeur fonctionne comme une balise et envoie périodiquement un signal à haute fréquence, par exemple cinq fois par seconde, pouvant être reçu par des récepteurs placés dans cette zone sécurisée. Selon ce document, le changement de mode de fonctionnement est associé à la sortie de l'espace de communication du lecteur placé à l'entrée de la zone sécurisée. Ceci ne permet pas une gestion temporelle de l'émission des signaux à haute fréquence dans la zone sécurisée et donc aucune synchronisation relative à des événements ultérieurs, notamment les arrêts d'un transport public, n'est envisageable. D'ailleurs, ce document WO 92/08148 ne suggère nullement une telle application et le transpondeur fonctionne comme une simple balise dans la zone sécurisée.

La présente invention a donc comme but de pallier l'inconvénient susmentionné en proposant un procédé de détection d'un individu ou d'un objet dans un espace délimité défini dans la revendication indépendante 1 ci-jointe.

La présente invention a également pour objet un système de détection d'individus ou d'objets dans un espace délimité présentant au moins une entrée tel que défini à la revendication indépendante 5 et une unité électronique formant un récepteur-émetteur ou récepteur-répondeur telle que définie à la revendication indépendante 15.

Selon les caractéristiques du procédé de détection de la présente invention, les caractéristiques correspondantes du système de détection permettant la mise en oeuvre dudit procédé de détection, ainsi que les caractéristiques correspondantes de l'unité électronique associée audit système de détection, les moyens de réception agencés dans ladite unité électronique restent en permanence ou quasi-permanence dans un mode d'écoute, tout au moins durant des périodes relativement longues dans le cas où des moyens d'interruption sont prévus, tout en consommant relativement peu étant donné qu'ils sont agencés pour fonctionner à basse fréquence. Cet agencement avantageux est rendu possible par le fait que l'unité électronique portable reçoit des premières données à basse fréquence lors du passage par une entrée à l'espace délimité qui permet une communication à courte distance et ainsi à basse fréquence, et par le fait que la partie électronique de ces unités électroniques portables fonctionnant à haute fréquence est activée pour l'essentiel seulement durant un ou plusieurs moment(s) limité(s) à l'intérieur desquels il est prévu une communication à haute fréquence, à une certaine fréquence ou dans une plage de fréquence, avec le(s) récepteur(s) ou lecteur(s) prévu(s) à l'intérieur dudit espace. Selon l'invention, au moins le début d'un moment limité est déterminé par lesdites premières données fournies à basse fréquence lors du passage par ladite entrée.

Dans un mode de réalisation préféré, lesdites premières données fournies à basse fréquence comprennent un signal de retardement définissant un intervalle de temps entre la réception de ces premières données et l'activation des circuits électroniques haute fréquence, notamment des moyens pour fournir les deuxièmes données au récepteur ou lecteur susmentionné. De ce fait, un événement déterminant peut avoir lieu entre la réception des premières données par l'unité électronique portable et la communication à haute fréquence, durant un moment limité d'activation, entre cette unité et un récepteur ou lecteur prévu à l'intérieur dudit espace. Cet événement déterminant est par exemple la fermeture des portes d'un moyen de transport public précédant son départ.

La présente invention permet donc de détecter avec une grande efficacité la présence d'individus ou d'objets dans un espace délimité et durant une période temporelle donnée tout en minimisant la consommation d'énergie nécessaire pour maintenir l'unité électronique portable associée à un individu ou un objet dans un mode d'écoute permettant une communication instantanée et permanente.

Des modes de réalisation particuliers et d'autres avantages de la présente invention ressortiront à la lecture de la description suivante faite en référence aux dessins annexés donnés à titre d'exemple nullement limitatif, et dans lesquels :
- la figure 1 représente un wagon de train équipé d'un premier mode de réalisation d'un système de détection selon la présente invention;
- la figure 2 représente schématiquement un premier mode de réalisation d'un récepteur-émetteur ou récepteur-répondeur formant une unité électronique portable selon l'invention associé au système de la figure 1;
- la figure 3 représente schématiquement une vue de dessus d'un compartiment de métro ou de bus équipé d'un deuxième mode de réalisation d'un système de détection selon la présente invention;
- la figure 4 représente un deuxième mode de réalisation d'une unité électronique portable selon l'invention associée au système de la figure 3; et
- la figure 5 est une vue similaire à la figure 3 et représente une variante perfectionnée du système de détection selon l'invention.

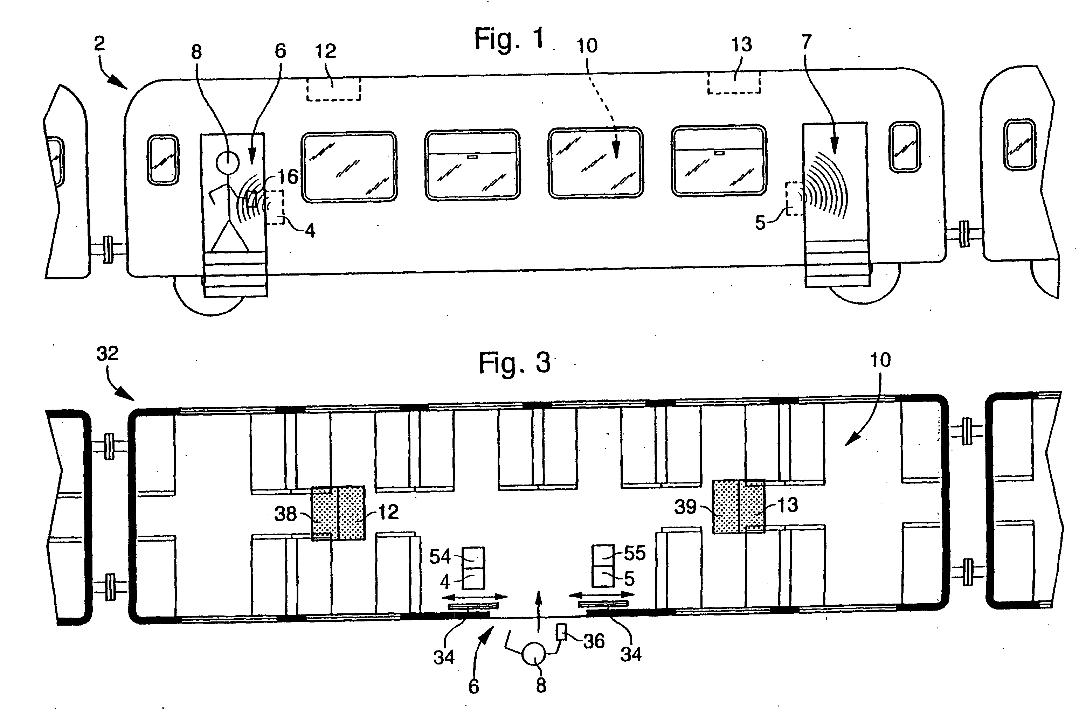

Le système et le procédé de détection selon l'invention seront décrits ci-après pour une application concernant le transport de personnes, notamment par le train (figure 1) et par un métro ou bus (figure 3). Bien évidemment tout autre moyen de transport, notamment le transport routier ou aérien peut être envisagé pour des individus ou des objets. On notera ici que le domaine d'application de la présente invention ne se limite pas au transport mais concerne aussi des espaces limités fixes, notamment des salles d'attente dans des aéroports, et le suivi de l'évolution d'un objet ou d'un individu dans un immeuble privé ou public, notamment une entreprise.

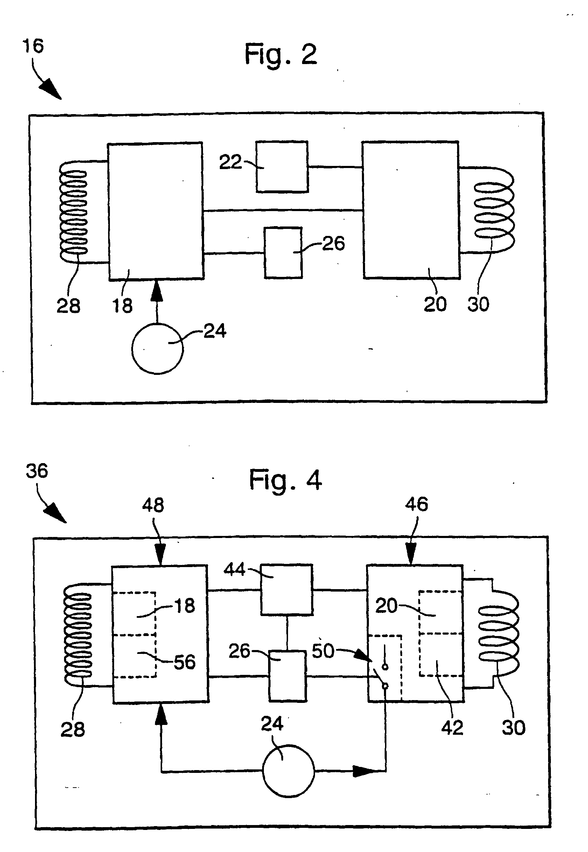

A l'aide des figures 1 et 2, on décrira ci-après un premier mode de réalisation d'un système de détection selon l'invention permettant une première mise en oeuvre du procédé selon l'invention. Le wagon 2 est équipé de deux émetteurs 4 et 5 situé respectivement aux deux entrées 6 et 7 permettant un accès à l'espace intérieur 10 du wagon 2. Selon la variante représentée, il est prévu deux récepteurs ou deux lecteurs 12 et 13 placés à l'intérieur de ce wagon.

Par récepteur, on comprend des moyens en mode écoute agencés pour recevoir des signaux codés à une certaine fréquence ou dans une plage de fréquence donnée. Par lecteur, on comprend en outre que ce dernier est agencé pour envoyer des signaux d'interrogation servant à gérer la communication avec un répondeur.

On notera de suite que pour les besoins de la présente invention, dans le cas où une seule entrée est prévue pour l'espace délimité surveillé, un seul émetteur et un seul récepteur ou lecteur placé dans une position centrale à l'intérieur de l'espace intérieur 10 peuvent suffire. Toutefois, selon les dimensions de l'espace délimité surveillé, l'utilisation de plusieurs récepteurs ou lecteurs peut s'avérer préférable.

L'émetteur 4 comprend des moyens d'émission à basse fréquence, notamment de l'ordre d'une centaine de kHz, et agencés pour fournir des premières données à une carte ou unité électronique portable 16 formant un récepteur-émetteur ou récepteur-répondeur représenté schématiquement à la figure 2. L'émetteur 4 ou 5 fournit ainsi des premières données à toute unité électronique 16 qui entre dans son champ de communication. Selon l'invention, il est prévu que les moyens de réception basse fréquence 18 de cette unité 16 sont en permanence ou quasi permanence dans un mode "écoute", en tout cas pendant les périodes de fonctionnement prévues pour l'unité électronique 16. A cet effet, le circuit de réception basse fréquence 18 est alimenté par une source d'énergie 24 agencée dans l'unité 16. Cette unité comprend également un circuit émetteur ou répondeur 20 à haute fréquence, notamment de l'ordre des centaines de MHz ou plus, pour fournir des deuxièmes données au récepteur ou lecteur 12 ou 13 à un instant ultérieur au passage par l'entrée 6 de l'individu 8 portant l'unité électronique 16. Ces deuxièmes données sont transmises à haute fréquence, soit à une fréquence donnée, soit dans une plage. de fréquence déterminée. En effet, la fréquence de communication peut varier d'un message à l'autre et également lors de la transmission d'un même message selon le procédé connu de communication à spectre étendu (de l'anglais "spread spectrum").

Les deuxièmes données sont stockées dans une mémoire 22 reliée au circuit 20. Dans une première variante, l'émission des deuxièmes données par le circuit 20 est effectuée à l'aide de la source d'énergie interne 24. Dans ce cas, un simple récepteur 12 ou 13 suffit au présent système de détection. Toutefois, dans une variante préférée, les données fournies par le circuit 20 sont transmises par une modulation d'un champ d'excitation fourni par le lecteur 12 ou 13. Dans une variante de ce mode de réalisation préféré, une partie de l'énergie du champ d'excitation peut également être fournie au circuit 20 pour assurer son alimentation propre et il est aussi envisageable d'utiliser le champ d'excitation pour recharger la source d'énergie 24.

Selon l'invention, il est prévu d'activer le circuit haute fréquence 20 seulement dans un ou des moment(s) limité(s) intervenant après la réception desdites premières données par le circuit récepteur basse fréquence 18. Ces premières données déterminent au moins le début d'un premier moment limité d'activation du circuit 20. Lesdites deuxièmes données sont fournies avec un certain retard relativement à la réception par l'unité 16 desdites premières données, car il est prévu de détecter la présence d'un individu ou d'un objet à l'intérieur d'un espace délimité après une certaine période suivant son passage par l'entrée, notamment seulement après la fermeture des entrées 6 et 7. Dans une variante préférée, il est prévu d'activer le circuit 20 seulement après un certain premier intervalle de temps suivant la réception desdites premières données et déterminé par un signal de retardement contenu dans ces premières données. A cet effet, il est prévu une base de temps 26 servant à compter un intervalle de temps ou à décompter cet intervalle pour déterminer le début d'un premier moment limité d'activation du circuit 20. Les récepteurs ou lecteurs 12 et 13 sont activés au moins pendant ledit un ou lesdits moment(s) limité(s).

L'unité électronique 16 comprend deux antennes 28 et 30 associées respectivement aux deux circuits 18 et 20 et adaptées respectivement à une communication à basse fréquence et à haute fréquence.

A l'aide des figures 3 et 4, on décrira ci-après un deuxième mode de réalisation d'un système de détection selon l'invention permettant une deuxième mise en oeuvre du procédé selon l'invention.

Les références déjà décrites précédemment dans le cadre des figures 1 et 2 ne seront pas à nouveau décrites ici en détail. Le compartiment 32 d'un métro ou d'un bus définit un espace 10 à l'intérieur duquel un individu 8 peut entrer par une seule entrée 6 prévue. Cette entrée est fermée par une porte coulissante 34. L'individu 8 entre dans le compartiment 32 muni d'une carte ou unité électronique 36 représentée schématiquement à la figure 4.

Selon ce deuxième mode de réalisation, il est prévu dans l'espace 10 d'agencer en plus des deux récepteurs ou lecteurs 12 et 13 deux émetteurs à haute fréquence 38 et 39. De préférence, la fréquence de communication ces émetteurs est la même que celle des récepteurs ou lecteurs susmentionnés auxquels ils peuvent être respectivement associés pour former deux unités de communication à haute fréquence.

Dans une variante préférée de la deuxième mise en oeuvre du procédé, il est prévu que les émetteurs 38 et 39 envoient aux unités électroniques 36 présentes dans l'espace 10 au moins un signal de réactivation déterminant un nouvel intervalle de temps après lequel le circuit de réception à haute fréquence 42 doit à nouveau être activé durant un moment limité ultérieur au moment limité pendant lequel ce signal de réactivation est reçu. Afin de pouvoir recevoir des troisièmes données contenant au moins ledit signal de réactivation, le circuit 42 est également activé pendant chaque moment limité où le circuit 22 est activé.

Le procédé décrit ci-avant permet notamment de contrôler la présence d'individus munis de cartes ou unités électroniques 36 dans l'espace 10 à des instants successifs séparés temporellement. Dans le cas d'un train ou d'un autre transport public, on détectera la présence des individus entre chaque arrêt successif. Ce procédé est avantageux par le fait qu'il engendre seulement une alimentation de la partie haute fréquence 46 de l'unité 16 pendant un seul moment limité. Dans le cas où aucune communication n'est établie pendant ce moment limité, la partie haute fréquence 46, en particulier le circuit 20, ne sera pas à nouveau activée. Ainsi, on garantit une économie d'énergie maximale.

Toutefois, dans une variante de réalisation, il est possible de prévoir que les premières données fournies à l'entrée à basse fréquence détermine plusieurs intervalles de temps différents correspondant à plusieurs moments limités durant lesquels le circuit 20 doit être activé. Cette solution présente le désavantage de figer les instants de communication à haute fréquence. Ainsi, en cas de retard ou de perturbation du trafic, les moments de détection de la présence d'individus pourraient ne pas être synchronisés aux différents arrêts successifs prévus.

Selon une variante de mise en oeuvre du procédé selon l'invention, les émetteurs 38 et 39 servent également à un protocole d'anti-collision pour la communication entre l'ensemble des cartes ou unités 36 présentes dans l'espace 10 et les récepteurs ou lecteurs 12 ou 13. L'homme du métier connaît différents protocoles d'anti-collision, notamment certains où un signal de fin de communication est envoyé à chaque carte ou unité 36 détectée correctement.

L'unité 36 comprend en outre un circuit électronique de traitement et une mémoire formant l'unité 44. Cette unité 44 est reliée à la partie haute fréquence 46 et peut également être reliée à la partie basse fréquence 48 de cette unité 36. De plus, l'unité 44 est reliée à la base de temps 26 pour gérer la mesure des divers intervalles de temps intervenant dans le procédé selon l'invention.

La source d'énergie ou accumulateur 24 alimente la partie 48 et également la partie 46 dans lesdits moments limités pendant lesquels des communications à haute fréquence interviennent. Pour schématiser le fait que la partie haute fréquence 46 est activée essentiellement pendant des moments limités déterminés, la source 24 est reliée à un interrupteur 50 commandé par la base de temps 26. La commande de l'interrupteur 50 peut également se faire via l'unité 44.

Selon une variante perfectionnée du deuxième mode de mise en oeuvre du système de l'invention, deux récepteurs ou lecteurs 54 et 55 à basse fréquence sont agencés à l'entrée 6. De préférence, ces récepteurs ou lecteurs forment respectivement deux unités de communication à basse fréquence avec les émetteurs 4 et 5. On notera que les émetteurs 4 et 5 à la figure 3 sont placés de part et d'autre de l'entrée 6 alors qu'ils étaient respectivement placés à deux entrées à la figure 1. Les récepteurs ou lecteurs 54 et 55 servent notamment à la réception de codes d'identification permettant d'identifier les individus ou objets entrant dans l'espace 10. A cet effet, les unités électroniques 36 comprennent un circuit émetteur à basse fréquence 56 agencé dans la partie 48 reliée à l'unité 44 dans laquelle est inscrit ce code d'identification. Ceci peut servir de moyens de sécurité et également à gérer le protocole de détection des unités 36 présentes dans l'espace 10. En particulier, dans le cas de la non-détection d'un des codes d'identification, une nouvelle interrogation peut être prévue soit immédiatement, soit après un court intervalle de temps afin de s'assurer que l'individu ou l'objet porteur de l'unité 36 correspondant à ce code d'identification est bien absente de l'espace 10.

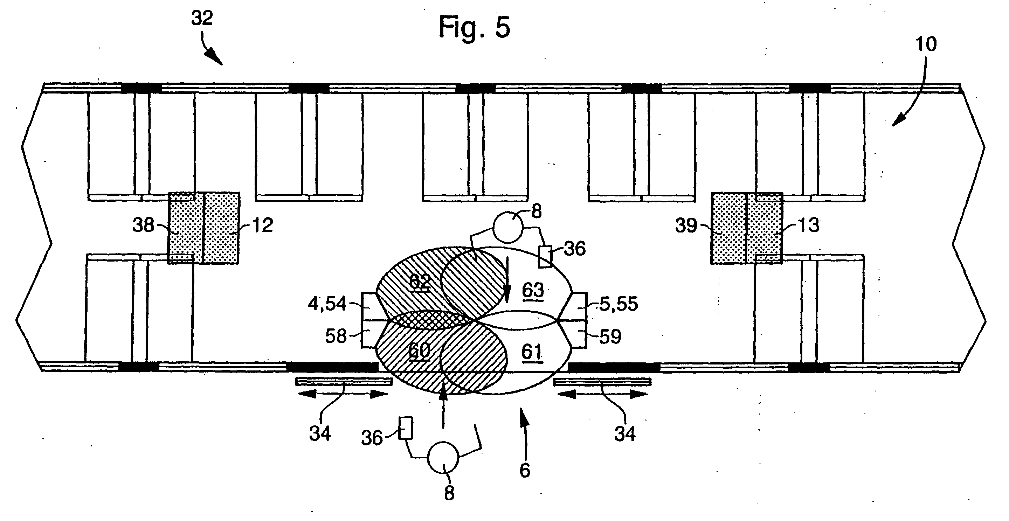

Finalement, à la figure 5 est représentée une autre variante perfectionnée du système de détection selon la présente invention. Les références déjà décrites à l'aide de la figure 3 ne seront pas à nouveau décrites ici. Cette variante se distingue essentiellement de celle de la figure 3 par le fait qu'il est prévu en plus des émetteurs-récepteurs 4,54 et 5,55 deux lecteurs ou émetteurs-récepteurs 58 et 59. Ces derniers présentent des régions de communication 60 et 61 partiellement séparées spatialement des régions de communication 62 et 63 des émetteurs-récepteurs 4,54 et 5,55.

Cette variante permet de détecter aisément le sens de passage à l'entrée 6, c'est-à-dire de détecter une entrée ou une sortie d'un individu ou d'un objet. Ceci permet de renforcer la gestion de la détection à l'intérieur de l'espace 10 surveillé et permet également d'optimiser la consommation d'énergie des unités 36. Lors d'une entrée, les anciennes données temporelles pour l'activation de la partie haute fréquence 46 sont effacées et de nouvelles instructions sont enregistrées. Lors d'une sortie, on peut prévoir par exemple d'annuler les instructions restantes concernant des moments limités d'activation ultérieure de la partie 46. Ainsi, cette partie haute fréquence ne sera pas activée inutilement une fois l'individu ou l'objet sorti de l'espace 10.

Dans une variante proposée, les émetteurs-récepteurs 58 et 59 communiquent à basse fréquence, de préférence à la même fréquence que les émetteurs 4 et 5.

## Revendications

1. Procédé de détection d'au moins un individu (8) ou objet dans un espace délimité (10) présentant au moins une entrée (6, 7) par laquelle cet individu ou objet a accès à cet espace, ce procédé comprenant la première étape suivante lors d'une entrée dans cet espace d'un individu portant une carte ou unité électronique (16; 36) associée à ce procédé :
A) réception par ladite carte ou unité électronique de premières données fournies par des premiers moyens d'émission (4, 5; 58, 59) dans une première plage de fréquence placés à ladite entrée, cette carte ou unité électronique comprenant des premiers moyens de réception (18) dans cette première plage de fréquence susceptibles d'être en mode d'écoute en permanence ou quasi-permanence au moins durant des périodes de fonctionnement;
ce procédé comportant ensuite la deuxième étape suivante :
B) activation de deuxièmes moyens (20), agencés dans ladite carte ou unité électronique, pour l'essentiel seulement durant un ou des moment(s) limité(s) à l'intérieur duquel /desquels il est prévu que cette carte ou unité électronique communique des deuxièmes données, à l'aide de ces deuxièmes moyens, avec au moins un premier récepteur ou lecteur (12, 13) agencé dans ledit espace délimité et activé au moins pendant ledit un ou lesdits moment(s) limité(s), lesdites deuxièmes données étant fournies dans une deuxième plage de fréquence supérieure à ladite première plage de fréquence;
ce procédé étant **caractérisé en ce qu'**au moins le début dudit un ou de l'un desdits moment(s) limité(s) est déterminé par lesdites premières données fournies à cette carte ou unité électronique.

2. Procédé de détection selon la revendication 1, **caractérisé en ce que** desdites deuxièmes données sont fournies par ladite carte ou unité électronique audit premier récepteur ou lecteur avec un retard relativement à la réception desdites premières données de manière à détecter si ledit individu ou objet est présent dans ledit espace délimité après une certaine période suivant son passage par ladite: entrée.

3. Procédé selon la revendication 1 ou 2, **caractérisé en ce que**, lors d'une communication de deuxièmes données entre ledit premier récepteur ou lecteur et ladite carte ou unité électronique, un signal de réactivation est envoyé à cette carte ou unité électronique par des deuxièmes moyens d'émission (38, 39) associés à ce premier récepteur ou lecteur et émettant dans ladite deuxième plage de fréquence, ce signal de réactivation déterminant un intervalle de temps après lequel lesdits deuxièmes moyens sont à nouveau activés durant un moment limité ultérieur au moment limité pendant lequel ledit signal de réactivation est reçu, ladite carte ou unité électronique portable comprenant notamment à cet effet des troisièmes moyens de réception (42) dans ladite deuxième plage de fréquence.

4. Procédé selon l'une des revendications précédentes, **caractérisé en ce qu'**il est prévu lors de l'étape A) qu'un deuxième récepteur ou lecteur (54, 55) placé à ladite entrée reçoive, lors du passage dudit individu ou objet par cette entrée, au moins un code d'identification fourni par ladite carte ou unité électronique qui comprend à cet effet des quatrièmes moyens (56) pour fournir des quatrièmes données à ce deuxième récepteur ou lecteur.

5. Système de détection d'individus ou d'objets dans un espace délimité (10) présentant au moins une entrée (6, 7) par laquelle des individus ou objets ont accès à cet espace, ce système comprenant au moins des premiers moyens d'émission (4, 5; 58, 59), placés à ladite entrée, et des unités électroniques portables (16, 36) agencées pour recevoir des premières données par lesdits premiers moyens d'émission et destinées à être portées par lesdits individus ou objets, et au moins un premier récepteur ou lecteur (12, 13) agencé pour communiquer avec lesdites unités électroniques situées dans au moins une partie dudit espace délimité des deuxièmes données, lesdits premiers moyens d'émission émettant dans une première plage de fréquence et ledit premier récepteur ou lecteur communiquant avec lesdites unités électroniques lesdites deuxièmes données dans une deuxième plage de fréquence supérieure à ladite première plage de fréquence, chaque unité électronique ayant des premiers moyens (18) pour recevoir lesdites premières données, susceptibles d'être en mode d'écoute en permanence ou quasi-permanence au moins durant des périodes de fonctionnement, et des deuxièmes moyens (20) pour la communication desdites deuxièmes données qui sont activés pour l'essentiel seulement durant un ou des moment(s) limité(s), **caractérisé en ce qu'**au moins le début dudit un ou de l'un desdits moment(s) limité(s), après que cette unité électronique ait pénétré la région de communication dudit premier émetteur, est déterminé par lesdites premières données.

6. Système selon la revendication 5, **caractérisé en ce que** lesdites premières données fournies par lesdits premiers moyens d'émission (4, 5) auxdites unités électroniques lors de leur passage par ladite entrée comprennent un signal de retardement qui détermine un intervalle de temps entre la réception de ces premières données et le début d'un moment limité d'activation desdits deuxièmes moyens (20) de ces unités électroniques, ces dernières comprenant une base de temps (26) permettant de compter ou décompter cet intervalle de temps.

7. Système selon la revendication 5 ou 6, comprenant en outre des deuxièmes moyens d'émission (38, 39) dans ladite deuxième plage de fréquence placés dans ledit espace limité et associés audit premier récepteur ou lecteur et prévu pour communiquer avec des troisièmes moyens de réception (42) dans ladite deuxième plage de fréquence qui sont agencés dans lesdites unités électroniques, ces deuxièmes moyens d'émission émettant des troisièmes données susceptibles d'être reçues par lesdites unités électroniques, situées dans au moins une partie dudit espace, pendant ledit un ou lesdits moment(s) limité(s).

8. Système selon la revendication 7, **caractérisé en ce que** lesdites troisièmes données reçues par une unité électronique dans un quelconque desdits moments limités comprennent un signal de réactivation déterminant un intervalle de temps après lequel lesdits deuxièmes moyens de cette unité électronique sont à nouveau activés durant un moment limité ultérieur au moment limité pendant lequel ledit signal de réactivation est reçu.

9. Système selon la revendication 7 ou 8, **caractérisé en ce qu'**il est prévu un protocole d'anti-collision pour la transmission des deuxièmes données par les unités électroniques audit premier récepteur ou lecteur (12, 13), lesdites troisièmes données servant au moins en partie à la mise en oeuvre dudit protocole d'anti-, collision.

10. Système selon l'une des revendications 5 à 9, **caractérisé en ce qu'**il comprend un deuxième récepteur ou lecteur (54, 55) situé à ladite entrée et associé à des quatrièmes moyens (56) agencés dans lesdites unités électroniques pour fournir des quatrièmes données auxdits deuxièmes récepteurs ou lecteurs, notamment des codes d'identification des unités électroniques passant par ladite entrée.

11. Système selon l'une des revendications 5 à 10, **caractérisé en ce que** lesdits premiers moyens d'émission comprennent au moins un premier émetteur (4, 5) et au moins un deuxième émetteur (58, 59) situés à ladite entrée, les régions de communication respectives de ces premier et deuxième émetteurs étant au moins partiellement séparées et agencées de manière à permettre de détecter le sens de passage des unités électroniques, c'est-à-dire soit une entrée, soit une sortie dudit espace délimité.

12. Système selon la revendication 11, **caractérisé en ce que** lors de l'entrée d'une quelconque desdites unités électroniques dans ledit espace, le fonctionnement desdits deuxièmes moyens de cette unité électronique est initialisé, et **en ce que** lors d'une sortie de cet espace clos d'une quelconque desdites unités électroniques, des instructions concernant l'activation de ces deuxièmes moyens sont annulées.

13. Système selon l'une des revendications 5 à 12, **caractérisé en ce que** ladite première plage de fréquence est située dans les basses fréquences, notamment de l'ordre d'une centaine de KHz, et **en ce que** ladite deuxième plage de fréquence est située dans les hautes fréquences, notamment de l'ordre des centaines de MHz et plus.

14. Système selon l'une des revendications 5 à 13, **caractérisé en ce que** ledit espace délimité est un wagon, un compartiment d'un véhicule routier ou tout autre espace de chargement d'un moyen de transport de personnes ou d'objets, ce système servant alors au contrôle des personnes ou objets occupant ledit espace lors d'un trajet ou d'une période donnée.

15. Unité électronique (16, 36) formant un récepteur-émetteur ou récepteur-répondeur, notamment sous la forme d'une carte, comprenant :
- des premiers moyens (18) pour recevoir des premières données dans une première plage de fréquence et susceptibles d'être en mode d'écoute en permanence ou en quasi-permanence, au moins durant des périodes de fonctionnement de cette unité;
- des deuxièmes moyens (20) pour fournir des deuxièmes données dans une deuxième plage de fréquence supérieure à ladite première plage de fréquence, ces deuxièmes moyens étant agencés pour être activés pour l'essentiel seulement durant un ou des premier(s) moment(s) limité(s), **caractérisé en ce qu'**au moins le début dudit un ou de l'un de ces premier(s) moment(s) est déterminé par lesdites premières données.

16. Unité électronique selon la revendication 15, **caractérisée en ce que** ladite première plage de fréquence est située dans les basses fréquences, notamment de l'ordre d'une centaine de KHz, et **en ce que** ladite deuxième plage de fréquence est située dans les hautes fréquences, notamment de l'ordre des centaines de MHz et plus.

17. Unité électronique selon la revendication 15 ou 16, **caractérisée en ce qu'**elle comprend en outre une base de temps (26) permettant de compter ou de décompter un intervalle de temps donné par la réception d'un signal de retardement, d'un signal de réactivation ou de tout autre signal, ladite unité électronique étant agencée pour activer lesdits deuxièmes moyens à la fin dudit intervalle de temps.

18. Unité électronique selon l'une des revendications 15 à 17, **caractérisée en ce qu'**elle comprend en outre des troisièmes moyens de réception (42) dans ladite deuxième plage de fréquence, ces troisièmes moyens étant susceptibles d'être activés seulement durant un ou des deuxième(s) moment(s) limité(s) intervenant après la réception desdites premières données.

19. Unité électronique selon la revendication 18, **caractérisée en ce que** lesdits deuxièmes et troisièmes moyens (20, 42) ont en commun une antenne (30) de réception-émission de signaux électromagnétiques dans ladite deuxième plage de fréquence.

20. Unité électronique selon l'une des revendications 15 à 19, **caractérisée en ce qu'**elle comprend des quatrièmes moyens d'émission (56) dans ladite première plage de fréquence, lesdits premiers et quatrièmes moyens d'émission (18, 56) ayant en commun une antenne (28) de réception-émission de signaux électromagnétiques dans ladite première plage de fréquence.

21. Unité électronique selon l'une des revendications 15 à 20, **caractérisée en ce qu'**elle comprend une source d'alimentation ou accumulateur d'énergie (24) pour alimenter au moins lesdits premiers moyens (18) de manière à laisser en permanence ou quasi-permanence ces premiers moyens dans un mode d'écoute, au moins durant lesdites périodes de fonctionnement.

22. Procédé de détection d'au moins un individu (8) ou objet dans un espace délimité (10) présentant au moins une entrée (6, 7) par laquelle cet individu ou objet a accès à cet espace, ce procédé comprenant la première étape suivante lors d'une entrée dans cet espace d'un individu portant une carte ou unité électronique (16; 36) associée à ce procédé :
A) réception par ladite carte ou unité électronique de premières données fournies par des premiers moyens d'émission (4, 5; 58, 59) dans une première plage de fréquence, cette carte ou unité électronique comprenant des premiers moyens de réception (18) dans cette première plage de fréquence susceptibles d'être en mode d'écoute en permanence ou quasi-permanence au moins durant des périodes de fonctionnement;
ce procédé comportant ensuite la deuxième étape suivante :
B) activation de deuxièmes moyens (20), agencés dans ladite carte ou unité électronique, pour l'essentiel seulement durant des moments limités à l'intérieur desquels il est prévu que cette carte ou unité électronique communique, à l'aide de ces deuxièmes moyens, des deuxièmes données avec au moins un premier récepteur ou lecteur (12, 13) agencé dans ledit espace délimité et activé au moins pendant lesdits moments limités, ces deuxièmes données étant fournies dans une deuxième plage de fréquence supérieure à ladite première plage de fréquence;
ce procédé étant **caractérisé en ce qu'**au moins le début de l'un desdits moments limités est déterminé par des troisièmes données fournies dans ladite deuxième plage de fréquence à cette carte ou unité électronique lors d'un desdits moments limités précédant ledit début de ce moment limité, ladite carte ou unité électronique portable comprenant notamment à cet effet des moyens de réception (42) dans ladite deuxième plage de fréquence.

23. Procédé selon ladite revendication 22, **caractérisé en ce que** lors d'une communication de troisièmes données dans un desdits moments limités, ces troisièmes données, fournies à ladite carte ou unité électronique, contiennent un signal de réactivation déterminant un nouvel intervalle de temps après lequel lesdits deuxièmes moyens (20) doivent à nouveau être activés durant un moment limité ultérieur à ce moment limité.

24. Unité électronique (36) formant un récepteur-émetteur ou récepteur-répondeur, notamment sous la forme d'une carte, comprenant :
- des premiers moyens (18) pour recevoir des premières données dans une première plage de fréquence et susceptibles d'être en mode d'écoute en permanence ou en quasi-permanence, au moins durant des périodes de fonctionnement de cette unité;
- des deuxièmes moyens (20) pour fournir des deuxièmes données dans une deuxième plage de fréquence supérieure à ladite première plage de fréquence, ces deuxièmes moyens étant agencés pour être activés pour l'essentiel seulement durant des premiers moments limités, **caractérisé en ce qu'**au moins le début de l'un de ceux-ci est déterminé par des troisièmes données fournies à cette unité électronique dans ladite deuxième plage de fréquence avant ledit début de ce moment limité, cette unité électronique comprenant notamment à cet effet :
- des troisièmes moyens (42) de réception dans ladite deuxième plage de fréquence.

25. Unité électronique selon la revendication 24, **caractérisé en ce que** lesdites troisièmes données sont fournies lors d'un moment limité de communication dans ladite deuxième plage de fréquence qui précède ledit début dudit un moment limité.

## Patentansprüche

1. Verfahren zum Erfassen wenigstens einer einzelnen Person (8) oder eines Gegenstandes in einem begrenzten Raum (10), der wenigstens einen Eingang (6, 7) aufweist, durch den diese einzelne Person oder der Gegenstand Zugang zu diesem Raum hat, wobei dieses Verfahren dann, wenn eine einzelne Person, die eine elektronische Karte oder Einheit (16; 36) trägt, die diesem Verfahren zugeordnet ist, in diesen Raum eintritt, den folgenden ersten Schritt umfasst:
A) Empfangen erster Daten, die von an dem Eingang angeordneten ersten Sendemitteln (4, 5; 58, 59) in einem ersten Frequenzbereich geliefert werden, durch die elektronische Karte oder Einheit, wobei diese elektronische Karte oder Einheit erste Empfangsmittel (18) in diesem ersten Frequenzbereich enthält, die ständig oder fast ständig wenigstens während der Betriebsperioden in einer Horchbetriebsart sein können;
wobei dieses Verfahren anschließend den folgenden zweiten Schritt umfasst:
B) Aktivieren zweiter Mittel (20), die in der elektronischen Karte oder Einheit angeordnet sind, im Wesentlichen nur während eines oder einiger begrenzter kurzer Zeitspannen, in denen vorgesehen ist, dass diese elektronische Karte oder Einheit zweite Daten mit Hilfe dieser zweiten Mittel mit wenigstens einem ersten Empfänger oder Leser (12, 13) austauscht, der in dem begrenzten Raum angeordnet und wenigstens während der oder den begrenzten kurzen Zeitspannen aktiv ist, wobei die zweiten Daten in einem zweiten Frequenzbereich geliefert werden, der über dem ersten Frequenzbereich liegt;
wobei dieses Verfahren **dadurch gekennzeichnet ist, dass** wenigstens der Beginn der einen oder der mehreren begrenzten kurzen Zeitspannen durch die ersten Daten, die an diese elektronische Karte oder Einheit geliefert werden, bestimmt wird.

2. Erfassungsverfahren nach Anspruch 1, **dadurch gekennzeichnet, dass** die zweiten Daten von der elektronischen Karte oder Einheit an den ersten Empfänger oder Leser mit einer Verzögerung in Bezug auf den Empfang der ersten Daten geliefert werden, derart, dass erfasst wird, ob die einzelne Person oder der Gegenstand in dem begrenzten Raum anwesend ist, nachdem eine bestimmte Zeitspanne nach ihrem bzw. seinem Durchgang durch den Eingang verstrichen ist.

3. Verfahren nach Anspruch 1 oder 2, **dadurch gekennzeichnet, dass** bei einer Übermittlung der zweiten Daten zwischen dem ersten Empfänger oder Leser und der elektronischen Karte oder Einheit an diese elektronische Karte oder Einheit von den zweiten Sendemitteln (38, 39), die diesem ersten Empfänger oder Leser zugeordnet sind und in dem zweiten Frequenzbereich senden, ein Reaktivierungssignal geschickt wird, das ein Zeitintervall bestimmt, nach dem die zweiten Mittel während einer begrenzten kurzen Zeitspanne, die später als die begrenzte kurze Zeitspanne liegt, in der das Reaktivierungssignal empfangen wird, erneut aktiviert werden, wobei die tragbare elektronische Karte oder Einheit vor allem hierzu dritte Empfangsmittel (42) in dem zweiten Frequenzbereich umfasst.

4. Verfahren nach einem der vorhergehenden Ansprüche, **dadurch gekennzeichnet, dass** im Schritt A) vorgesehen ist, dass ein zweiter Empfänger oder Leser (54, 55), der an dem Eingang angeordnet ist, beim Durchgang der einzelnen Person oder des Gegenstandes durch diesen Eingang wenigstens einen Identifizierungscode empfängt, der von der elektronischen Karte oder Einheit geliefert wird, wobei die elektronische Karte oder Einheit hierzu vierte Mittel (56) zum Liefern vierter Daten an diesen zweiten Empfänger oder Leser umfasst.

5. System zum Erfassen einzelner Personen oder Gegenstände in einem begrenzten Raum (10), der wenigstens einen Eingang (6, 7) aufweist, durch den einzelne Personen oder Gegenstände Zugang zu diesem Raum haben, wobei dieses System wenigstens erste Sendemittel (4, 5; 58, 59), die an dem Eingang angeordnet sind, sowie tragbare elektronische Einheiten (16, 36), die so beschaffen sind, dass sie von den ersten Sendemitteln erste Daten empfangen können, und dazu bestimmt sind, von den einzelnen Personen oder Gegenständen getragen zu werden, und wenigstens einen ersten Empfänger oder Leser (12, 13), der so beschaffen ist, dass er mit den elektronischen Einheiten, die sich wenigstens in einem Teil des begrenzten Raums befinden, zweite Daten austauscht, umfasst, wobei die ersten Sendemittel in einem ersten Frequenzbereich senden und der erste Empfänger oder Leser mit den elektronischen Einheiten zweite Daten in einem zweiten Frequenzbereich, der über dem ersten Frequenzbereich liegt, austauscht, wobei jede elektronische Einheit erste Mittel (18) zum Empfangen der ersten Daten besitzt, die ständig oder nahezu ständig wenigstens während der Betriebsperioden in einer Horchbetriebsart sein können, und zweite Mittel (20) zum Übermitteln der zweiten Daten, die im Wesentlichen nur während einer oder einiger begrenzter kurzer Zeitspannen aktiv sind, besitzt, **dadurch gekennzeichnet, dass** wenigstens der Beginn der einen oder mehreren begrenzten kurzen Zeitspannen durch die ersten Daten bestimmt wird, nachdem diese elektronische Einheit in den Kommunikationsbereich des ersten Senders eingedrungen ist.

6. System nach Anspruch 5, **dadurch gekennzeichnet, dass** die ersten Daten, die von den ersten Sendemitteln (4, 5) an die ersten elektronischen Einheiten geliefert werden, wenn diese sich durch den Eingang bewegen, ein Verzögerungssignal enthalten, das ein Zeitintervall zwischen dem Empfang dieser ersten Daten und dem Beginn einer begrenzten kurzen Zeitspanne der Aktivierung der zweiten Mittel (20) dieser elektronischen Einheiten bestimmt, wobei diese letzteren einen Taktgeber (26) enthalten, der ermöglicht, dieses Zeitintervall aufwärts oder abwärts zu zählen.

7. System nach Anspruch 5 oder 6, das außerdem zweite Sendemittel (38, 39) in dem zweiten Frequenzbereich umfasst, die in dem begrenzten Raum angeordnet, dem ersten Empfänger oder Leser zugeordnet und dazu vorgesehen sind, mit dritten Empfangsmitteln (42) in dem zweiten Frequenzbereich zu kommunizieren, die in den elektronischen Einheiten angeordnet sind, wobei diese zweiten Sendemittel dritte Daten aussenden, die von den elektronischen Einheiten, die sich wenigstens in einem Teil des Raums befinden, während der einen oder mehreren begrenzten kurzen Zeitspannen empfangen werden können.

8. System nach Anspruch 7, **dadurch gekennzeichnet, dass** die dritten Daten, die von einer elektronischen Einheit in einer der begrenzten kurzen Zeitspannen empfangen werden, ein Reaktivierungssignal umfassen, das ein Zeitintervall bestimmt, nach dem die zweiten Mittel dieser elektronischen Einheit während einer begrenzten kurzen Zeitspanne, die später als die begrenzte kurze Zeitspanne liegt, in der das Reaktivierungssignal empfangen wird, erneut aktiviert werden.

9. System nach Anspruch 7 oder 8, **dadurch gekennzeichnet, dass** ein Antikollisionsprotokoll für die Übertragung der zweiten Daten durch die elektronischen Einheiten an den ersten Empfänger oder Leser (12, 13) vorgesehen ist, wobei die dritten Daten wenigstens zum Teil der Ausführung des Antikollisionsprotokolls dienen.

10. System nach einem der Ansprüche 5 bis 9, **dadurch gekennzeichnet, dass** es einen zweiten Empfänger oder Leser (54, 55) umfasst, der sich an dem Eingang befindet und dem vierte Mittel (56) zugeordnet sind, die in den elektronischen Einheiten angeordnet sind, um an die zweiten Empfänger oder Leser vierte Daten, insbesondere Identifizierungscodes der elektronischen Einheiten, die sich durch den Eingang bewegen, zu liefern.

11. System nach einem der Ansprüche 5 bis 10, **dadurch gekennzeichnet, dass** die ersten Sendemittel wenigstens einen ersten Sender (4, 5) und wenigstens einen zweiten Sender (58, 59), die sich an dem Eingang befinden, umfassen, wobei die jeweiligen Kommunikationsbereiche dieser ersten und zweiten Sender wenigstens teilweise getrennt und so beschaffen sind, dass die Erfassung der Vorbeibewegungsrichtung der elektronischen Einheiten, d. h. ein Eintreten in den begrenzten Raum oder ein Verlassen desselben, erfasst werden können.

12. System nach Anspruch 11, **dadurch gekennzeichnet, dass** beim Eintreten einer der elektronischen Einheiten in den Raum der Betrieb der zweiten Mittel dieser elektronischen Einheit initialisiert wird und dass dann, wenn eine der elektronischen Einheiten diesen geschlossenen Raum verlässt, Befehle bezüglich der Aktivierung dieser zweiten Mittel aufgehoben werden.

13. System nach einem der Ansprüche 5 bis 12, **dadurch gekennzeichnet, dass** der erste Frequenzbereich bei niedrigen Frequenzen liegt, insbesondere in der Größenordnung von etwa 100 kHz, und dass der zweite Frequenzbereich bei hohen Frequenzen liegt, insbesondere in der Größenordnung von Hunderten von MHz oder mehr.

14. System nach einem der Ansprüche 5 bis 13, **dadurch gekennzeichnet, dass** der begrenzte Raum ein Eisenbahnwagen, ein Fahrgastraum eines Straßenfahrzeugs oder jeder andere Raum, der die Aufgabe eines Mittels zum Transport von Personen oder Gegenständen hat, ist, wobei dieses System dann der Kontrolle der Personen oder Gegenstände dient, die diesen Raum während einer Fahrt oder einer gegebenen Zeitspanne belegen.

15. Elektronische Einheit (16, 36), die einen Empfänger/Sender oder einen Empfänger/Antwortsender insbesondere in Form einer Karte bildet und umfasst:
- erste Mittel (18), die erste Daten in einem ersten Frequenzbereich empfangen und ständig oder fast ständig wenigstens während Betriebsperioden dieser Einheit in einer Horchbetriebsart sein können;
- zweite Mittel (20), die zweite Daten in einem zweiten Frequenzbereich, der über dem ersten Frequenzbereich liegt, liefern können, wobei diese zweiten Mittel so beschaffen sind, dass sie im Wesentlichen nur während einer oder einiger erster begrenzter kurzer Zeitspannen aktiviert werden, **dadurch gekennzeichnet, dass** wenigstens der Beginn der einen oder der einigen ersten Zeitspannen durch die ersten Daten bestimmt wird.

16. Elektronische Einheit nach Anspruch 15, **dadurch gekennzeichnet, dass** der erste Frequenzbereich bei niedrigen Frequenzen liegt, insbesondere in der Größenordnung von etwa 100 kHz, und dass der zweite Frequenzbereich bei hohen Frequenzen liegt, insbesondere in der Größenordnung von Hunderten von MHz oder mehr.

17. Elektronische Einheit nach Anspruch 15 oder 16, **dadurch gekennzeichnet, dass** sie außerdem einen Taktgeber (26) umfasst, der durch den Empfang eines Verzögerungssignals, eines Reaktivierungssignals oder jedes anderen Signals ermöglicht, ein gegebenes Zeitintervall aufwärts oder abwärts zu zählen, wobei die elektronische Einheit so beschaffen ist, dass sie die zweiten Mittel am Ende des Zeitintervalls aktiviert.

18. Elektronische Einheit nach einem der Ansprüche 15 bis 17, **dadurch gekennzeichnet, dass** sie außerdem dritte Empfangsmittel (42) in dem zweiten Frequenzbereich umfasst, wobei diese dritten Mittel nur während einer oder einiger der begrenzten kurzen Zeitspannen, die nach dem Empfang der ersten Daten auftreten, aktiviert werden können.

19. Elektronische Einheit nach Anspruch 18, **dadurch gekennzeichnet, dass** die zweiten und die dritten Mittel (20, 42) eine Antenne (30) zum Empfangen und Senden elektromagnetischer Signale in dem zweiten Frequenzbereich gemeinsam haben.

20. Elektronische Einheit nach einem der Ansprüche 15 bis 19, **dadurch gekennzeichnet, dass** sie vierte Sendemittel (56) in dem ersten Frequenzbereich umfasst, wobei die ersten und die vierten Sendemittel (18, 56) eine Antenne (28) zum Empfangen und Senden elektromagnetischer Signale in dem ersten Frequenzbereich gemeinsam haben.

21. Elektronische Einheit nach einem der Ansprüche 15 bis 20, **dadurch gekennzeichnet, dass** sie eine Versorgungsquelle oder einen Energieakkumulator (24) umfasst, um wenigstens die ersten Mittel (18) in der Weise zu speisen, dass diese ersten Mittel ständig oder fast ständig wenigstens während der Betriebsperioden in einer Horchbetriebsart gelassen werden.

22. Verfahren zum Erfassen wenigstens einer einzelnen Person (8) oder eines Gegenstandes in einem begrenzten Raum (10), der wenigstens einen Eingang (6, 7) aufweist, durch den diese einzelne Person oder der Gegenstand Zugang zu diesem Raum hat, wobei dieses Verfahren dann, wenn eine einzelne Person, die eine elektronische Karte oder Einheit (16; 36) trägt, die diesem Verfahren zugeordnet ist, in diesen Raum eintritt, den folgenden ersten Schritt umfasst:
A) Empfangen erster Daten, die von ersten Sendemitteln (4, 5; 58, 59) in einem ersten Frequenzbereich geliefert werden, durch die elektronische Karte oder Einheit, wobei diese elektronische Karte oder Einheit erste Empfangsmittel (18) in diesem Frequenzbereich umfasst, die ständig oder fast ständig wenigstens während der Betriebsperioden in einer Horchbetriebsart sein können;
wobei dieses Verfahren anschließend den folgenden zweiten Schritt umfasst:
B) Aktivieren von zweiten Mitteln (20), die in der elektronischen Karte oder Einheit angeordnet sind, im Wesentlichen nur während begrenzter kurzer Zeitspannen, in denen vorgesehen ist, dass diese elektronische Karte oder Einheit mit Hilfe dieser zweiten Mittel zweite Daten mit wenigstens einem ersten Empfänger oder Leser (12, 13) austauscht, der in dem begrenzten Raum angeordnet ist und wenigstens während dieser begrenzten kurzen Zeitspannen aktiv ist, wobei diese zweiten Daten in einem zweiten Frequenzbereich, der über dem ersten Frequenzbereich liegt, geliefert werden;
wobei dieses Verfahren **dadurch gekennzeichnet ist, dass** wenigstens der Beginn einer der begrenzten kurzen Zeitspannen durch dritte Daten bestimmt wird, die in dem zweiten Frequenzbereich an diese elektronische Karte oder Einheit während einer der begrenzten kurzen Zeitspannen, die dem Beginn dieser begrenzten kurzen Zeitspanne vorhergehen, geliefert werden, wobei die tragbare elektronische Karte oder Einheit vor allem hierzu Empfangsmittel (42) im zweiten Frequenzbereich umfasst.

23. Verfahren nach Anspruch 22, **dadurch gekennzeichnet, dass** bei einer Übermittlung dritter Daten in einer der begrenzten kurzen Zeitspannen diese dritten Daten, die an die elektronische Karte oder Einheit geliefert werden, ein Reaktivierungssignal enthalten, das ein neues Zeitintervall bestimmt, nach dem die zweiten Mittel (20) während einer begrenzten kurzen Zeitspanne, die später als diese begrenzte kurze Zeitspanne liegt, erneut aktiviert werden sollen.

24. Elektronische Einheit (36), die einen Empfänger/Sender oder Empfänger/Antwortsender insbesondere in Form einer Karte bildet und umfasst:
- erste Mittel (18), die erste Daten in einem ersten Frequenzbereich empfangen und ständig oder fast ständig wenigstens während der Betriebsperioden dieser Einheit in einer Horchbetriebsart sein können;
- zweite Mittel (20), die zweite Daten in einem zweiten Frequenzbereich, der über dem ersten Frequenzbereich liegt, liefern können, wobei diese zweiten Mittel so beschaffen sind, dass sie im Wesentlichen nur während der ersten begrenzten kurzen Zeitspannen aktiviert werden, **dadurch gekennzeichnet, dass** wenigstens der Beginn einer von ihnen durch dritte Daten bestimmt wird, die an diese elektronische Einheit in dem zweiten Frequenzbereich vor dem Beginn dieser begrenzten kurzen Zeitspanne geliefert werden, wobei diese elektronische Einheit vor allem hierzu umfasst:
- dritte Mittel (42) für den Empfang in dem zweiten Frequenzbereich.

25. Elektronische Einheit nach Anspruch 24, **dadurch gekennzeichnet, dass** die dritten Daten während einer begrenzten kurzen Zeitspanne der Übermittlung in dem zweiten Frequenzbereich, die dem Beginn dieser einen begrenzten kurzen Zeitspanne vorhergeht, geliefert werden.

## Claims

1. Method for detecting at least an individual (8) or object in a delimited space (10) having at least one entrance (6, 7) through which said individual or object has access to the space, this method including the following first step during an entry into said space by an individual carrying an electronic card or unit (16; 36) associated with said method :
A) reception by said electronic card or unit of first data supplied by first transmission means (4, 5; 58, 59) in a first frequency range placed at said entrance, said electronic card or unit including first receiving means (18) within said first frequency range capable of permanently or quasi-permanently being in listening mode at least during periods of operation;
this method then including the following second step :
B) activation of second means (20), arranged in said electronic card or unit, essentially during one or more limited moments within which said electronic card or unit communicates second data, using said second means, with at least a first receiver or reader (12, 13) arranged in said delimited space and activated at least during said one or more limited moments, said second data being supplied within a second frequency range higher than said first frequency range;
this method being **characterised in that** at least the beginning of said one or one of said limited moments is determined by said first data supplied to said electronic card or unit.

2. Detection method according to claim 1, **characterised in that** some of said second data are supplied by said electronic card or unit to said first receiver or reader with a delay relative to reception of said first data so as to detect whether said individual or object is present in said delimited space after a certain period following his or its passage through the entrance.

3. Method according to claim 1 or 2, **characterised in that**, during communication of second data between said first receiver or reader and said electronic card or unit, a reactivation signal is sent to said electronic card or unit by second transmission means (38, 39) associated with said first receiver or reader and transmitting in said second frequency range, this reactivation signal determining a time interval after which said second means are again activated during a limited moment subsequent to the limited moment during which said reactivation signal is received, said card or portable electronic unit including in particular for this purpose third receiving means (42) within said second frequency range.

4. Method according to any of the preceding claims, **characterised in that** at step A) a second receiver or reader (54, 55) placed at said entrance receives, when said individual or object passes through said entrance, at least an identification code supplied by said electronic card or unit which includes for this purpose fourth means (56) for supplying fourth data to said second receiver or reader.

5. System for detecting individuals or objects in a delimited space (10) having at least one entrance (6, 7) through which individuals or objects have access to said space, this system including at least first transmission means (4, 5; 58, 59) placed at said entrance and portable electronic units (16, 36) arranged to receive first data via said first transmission means and intended to be carried by said individuals or objects, and at least a first receiver or reader (12, 13) arranged to communicate second data with said electronic units located in at least a part of said delimited space, said first transmission means transmitting in a first frequency range and said first receiver or reader communicating said second data with said electronic units in a second frequency range higher than said first frequency range, each electronic unit having first means (18) for receiving said first data, capable of being permanently or quasi-permanently in listening mode at least during periods of operation, and second means (20) for communicating some of said second data which are activated essentially only during one or more limited moments, **characterised in that** at least the beginning of said one or one of said limited moments, after said electronic unit has entered the communication region of said first transmitter, is determined by said first data.

6. System according to claim 5, **characterised in that** said first data supplied by said first transmission means (4, 5) to said electronic units when they pass through said entrance include a delay signal which determines a time interval between reception of said first data and the beginning of a limited activation moment of said second means (20) of said electronic units, the latter including a time base (26) allowing this time interval to be counted or counted down.

7. System according to claim 5 or 6, further comprising second transmission means (38, 39) in said second frequency range placed in said limited space and associated with said first receiver or reader and provided for communicating with third receiving means (42) in said second frequency range which are arranged in said electronic units, said second transmission means transmitting third data capable of being received by said electronic units, located in at least a part of said space, during said one or said limited moments.

8. System according to claim 7, **characterised in that** said third data received by an electronic unit during any of said limited moments include a reactivation signal determining a time interval after which said second means of said electronic unit are again activated during a limited moment subsequent to the limited moment during which said reactivation signal is received.

9. System according to claim 7 or 8, **characterised in that** an anti-collision protocol is provided for the transmission of the second data by the electronic units to said first receiver or reader (12, 13), said third data being used at least partly for implementing said anti-collision protocol.

10. System according to any of claims 5 to 9, **characterised in that** it includes a second receiver or reader (54, 55) located at said entrance and associated with fourth means (56) arranged in said electronic units for supplying fourth data to said second receivers or readers, in particular identification codes of the electronic units passing through said entrance.

11. System according to any of claims 5 to 10, **characterised in that** said first transmission means include at least a first transmitter (4, 5) and at least a second transmitter (58, 59) located at said entrance, the respective communication regions of these first and second transmitters being at least partially separated and arranged so as to allow the direction of passage of the electronic units to be detected, i.e. either an entry or an exit into or from said delimited space.

12. System according to claim 11, **characterised in that** during an entry of any one of said electronic units into said space, the operation of said second means of said electronic unit is initialised, and **in that** during an exit from said delimited space by any of said electronic units, instructions concerning the activation of these second means are cancelled.

13. System according to any of claims 5 to 12, **characterised in that** said first frequency range is in the low frequencies, in particular of the order of one hundred kHz, and **in that** said second frequency range is in the high frequencies, in particular of the order of hundreds of MHz and more.

14. System according to any of claims 5 to 13, **characterised in that** said delimited space is a carriage, a compartment of a road vehicle or any other loading space of means for transporting people or objects, this system then being used for checking the people or objects occupying said space during a trip or given time period.

15. Electronic unit (16, 36) forming a transceiver or receiver-responder, in particular in the form of a card, including :
- first means (18) for receiving first data in a first frequency range and capable of being in listening mode permanently or quasi-permanently, at least during operating periods of said unit;
- second means (20) for supplying second data in a second frequency range higher than said first frequency range, these second means being arranged to be activated essentially only during one or limited moments, **characterized in that** at least the beginning of said one or one of said limited moments is determined by said first data.

16. Electronic unit according to claim 15, **characterised in that** said first frequency range is in the low frequencies, in particular of the order of one hundred KHz, and **in that** said second frequency range is in the high frequencies, in particular of the order of hundreds of MHz and more.

17. Electronic unit according to claim 15 or 16, **characterised in that** it further includes a time base (26) allowing a time interval given by the reception of a delay signal, a reactivation signal or any other signal, to be counted or counted down, said electronic unit being arranged to activate said second means at the end of said time interval.

18. Electronic unit according to claims 15 to 17, **characterised in that** it further includes third receiving means (42) in said second frequency range, these third means being capable of being activated only during one or more second limited moments occurring after reception of said first data.

19. Electronic unit according to claim 18, **characterised in that** said second and third means (20, 42) have in common an antenna (30) for transceiving electromagnetic signals in said second frequency range.

20. Electronic unit according to any of claims 15 to 19, **characterised in that** it includes fourth transmission means (56) in said first frequency range, said first and fourth emission means (18, 56) having in common an antenna (28) for transceiving electromagnetic signals in said first frequency range.

21. Electronic unit according to any of claims 15 to 20, **characterised in that** it includes a power source or energy accumulator (24) for powering at least said first means (18) so as to leave said first means permanently or quasi-permanently in a listening mode, at least during said operating periods.

22. Method for detecting at least an individual (8) or object in a delimited space (10) having at least one entrance (6, 7) through which this individual or object has access to said space, this method including the following first step during an entry into said space by an individual carrying an electronic card or unit (16; 36) associated with said method:
A) reception by said electronic card or unit of first data supplied by first transmission means (4, 5; 58, 59) in a first frequency range, said electronic card or unit including first receiving means (18) in said first frequency range capable of permanently or quasi-permanently being in listening mode at least during periods of operation;
this method then including the following second step :
B) activation of second means (20), arranged in said electronic card or unit, essentially during limited moments within which said electronic card or unit communicates second data, via said second means, with at least a first receiver or reader (12, 13) arranged in said delimited space and activated at least during said limited moments, said second data being supplied in a second frequency range higher than said first frequency range;
this method being **characterised in that** at least the beginning of one of said limited moments is determined by third data supplied in said second frequency range to said electronic card or unit during one of said limited moments preceding said beginning of said limited moment, said card or portable electronic unit including in particular receiving means (42) in said second frequency range.

23. Method according to said claim 22, **characterised in that** during communication of third data in one of said limited moments, said third data, supplied to said electronic card or unit, contain a reactivation signal determining a new time interval after which said second means (20) have to be activated again for a limited moment subsequent to said limited moment.

24. Electronic unit (36) forming a transceiver or receiver-responder, in particular in the form of a card, including :
- first means (18) for receiving first data in a first frequency range and capable of being in listening mode permanently or quasi-permanently, at least during operating periods of said unit;
- second means (20) for supplying second data in a second frequency range higher than said first frequency range, these second means being arranged to be activated essentially only during first limited moments, **characterized in that** at least the beginning of one of said first limited moment is determined by third data supplied to said electronic unit in said second frequency range before said beginning of said limited moment, said electronic unit including in particular for such purpose :
- third receiving means (42) in said second frequency range.

25. Electronic unit according to claim 24, **characterised in that** said third data are supplied during a limited moment of communication in said second frequency range, which precedes said beginning of a limited moment.
